Europäisches Patentamt

European Patent Office

Office européen des brevets

(19)

(11) Veröffentlichungsnummer: **0 324 906 B1**

# EUROPÄISCHE PATENTSCHRIFT

(12)

(45) Veröffentlichungstag der Patentschrift: **02.12.92**

(51) Int. Cl.⁵: **B60T 13/40**, B60T 15/60, B60T 17/18

(21) Anmeldenummer: **88117909.7**

(22) Anmeldetag: **27.10.88**

(54) **Notsteuereinrichtung.**

(30) Priorität: **23.12.87 DE 3743711**

(43) Veröffentlichungstag der Anmeldung:
**26.07.89 Patentblatt 89/30**

(45) Bekanntmachung des Hinweises auf die
Patenterteilung:
**02.12.92 Patentblatt 92/49**

(84) Benannte Vertragsstaaten:
**DE FR GB IT SE**

(56) Entgegenhaltungen:
**DE-A- 2 551 160**
**DE-A- 3 031 105**
**US-A- 3 304 131**
**US-A- 3 866 623**

(73) Patentinhaber: **WABCO Westinghouse Fahr-**
**zeugbremsen GmbH**
**Am Lindener Hafen 21 Postfach 91 12 80**
**W-3000 Hannover 91(DE)**

(72) Erfinder: **Fauck, Gerhard**
**Tiergartenstrasse 156**
**W-3000 Hannover 71(DE)**

(74) Vertreter: **Schrödter, Manfred**
**WABCO Westinghouse Fahrzeugbremsen**
**GmbH Am Lindener Hafen 21 Postfach 91 12**
**80**
**W-3000 Hannover 91(DE)**

# Beschreibung

Die Erfindung betrifft eine Notsteuereinrichtung für wenigstens einen druckmittelbetätigten Verbraucherkreis gemäß dem Oberbegriff des Patentanspruches 1.

Eine derartige Notsteuereinrichtung dient dazu, bei einer Störung der Druckmittelzufuhr zum zugeordneten Verbraucherkreis ein Drucksignal auszusteuern. Der Eintritt der genannten Störung wird nachstehend Notfall genannt. In der Regel löst das Drucksignal eine Notfunktion in dem Verbraucherkreis aus. Verbraucherkreise, die einer derartigen Notsteuereinrichtung bedürfen, sind auf vielen technischen Gebieten üblich; beispielhaft seien Betätigungsanlagen für Bahnschranken, für Förder- und/oder Hebeeinrichtungen, für industrielle Fertigungseinrichtungen und Fahrzeugbremsanlagen, insbesondere Anhängerbremsanlagen, erwähnt.

Eine Notsteuereinrichtung der eingangs genannten Art ist aus der DE 30 31 105 A1, dort insbesondere Fig. 2, für eine (Fahrzeug-) Anhängerbremsanlage als Verbraucherkreis bekannt. Als Druckmittelquelle dient dort die Bremsanlage eines den mit der Anhängerbremsanlage ausgerüsteten Anhänger ziehenden Motorfahrzeugs, genauer: eine zugehörige Druckbeschaffungseinrichtung. Als mit der Druckmittelquelle verbundener Zuführungsteil der Versorgungsleitung dient dort eine in bekannter Weise an die Motorfahrzeugbremsanlage angeschlossene Vorratsleitung. Die Ansteuerleitung und die Aussteuerleitung werden dort von einer ebenfalls in bekannter Weise an die Motorwagenbremsanlage angeschlossenen Bremsleitung gebildet, welche über die Notsteuereinrichtung zu dem Verbraucherkreis, genauer: zu einem Betätigungsventil desselben, führt. Im Notfall wird die Aussteuerleitung mit dem Verbraucherkreisvorrat verbunden und dadurch als Notfunktion eine Bremsung ausgelöst.

In einer Anhängerbremsanlage ist bei vom Motorfahrzeug abgekuppelten Anhänger der Zuführungsteil der Versorgungsleitung stets drucklos. In diesem Falle dient also die Notsteuereinrichtung auch zur Feststellbremsung des abgekuppelten Anhängers.

Es gibt Einsatzfälle, in denen es notwendig ist, den Verbraucherkreis wenigstens vorübergehend aus der Notfunktion zurückschalten zu können, beispielsweise zur Durchführung von Reparaturarbeiten. Bei einer Anhängerbremsanlage als Verbraucherkreis besteht dieses Bedürfnis insbesondere dann, wenn der vom Motorfahrzeug abgekuppelte Anhänger manövrierfähig gemacht werden soll. Für diese Einsatzfälle ist die Verwendung einer Löseeinrichtung üblich, wie sie aus der WABCO-Druckschrift "Anhänger-Bremsventil 971 002 Teil 2", Ausgabe 01.79, als Anhänger-Löseventil bekannt ist. Eine solche Löseeinrichtung wird strömungsmäßig parallel zu dem Überströmventil der gattungsgemäßen Notsteuereinrichtung angeordnet. Sie ist mittels eines Stößels wenigstens durch eine von außen angreifende Kraft in eine erste Stellung stellbar, in der sie die Notsteuereinrichtung unbeeinflußt läßt. Durch eine entgegengerichtete äußere Kraft ist sie in eine zweite Stellung stellbar, in der sie die Verbindung zwischen Zuführungsteil der Versorgungsleitung und Vorratseingangskammer unterbricht und das Rückschlagventil umgeht. Dadurch wird die Vorratseingangskammer mit dem Druck des Verbraucherkreisvorrats aus der Vorratsauslaßkammer beaufschlagt mit dem Ergebnis, daß das Drucksignal zum Verbraucherkreis verschwindet und dieser aus der Notfunktion zurückgesteuert wird. Im Falle einer Anhängerbremsanlage bedeutet das, daß diese durch Umstellung der Löseeinrichtung in ihre zweite Stellung gelöst wird.

Die Verwendung der bekannten Löseeinrichtung stellt wegen deren Ausbildung als selbständige Baueinheit eine aufwendige Lösung dar.

Der Erfindung liegt deshalb die Aufgabe zugrunde, mit einfachen Mitteln die mit der Löseeinrichtung erzielbaren Wirkungen in eine Notsteuereinrichtung der eingangs genannten Art zu integrieren.

Diese Aufgabe wird durch die im Patentanspruch 1 angegebene Erfindung gelöst. Vorteilhafte Ausgestaltungen und ein vorteilhaftes Anwendungsgebiet der Erfindung sind in den Unteransprüchen angegeben.

Die Erfindung läßt sich ganz ohne oder ohne nennenswerte Vergrößerung der Baumaße der Notsteuereinrichtung ausbilden und bietet daher den Vorteil einer kompakten Bauweise mit erheblich verringertem Bedarf an Einbauraum.

Die Erfindung ist zum Einsatz mit Druckmittel jeder Art geeignet. Nur beispielhaft sei als ein übliches Druckmittel Druckluft genannt.

Eine Ausgestaltung der Erfindung nach dem Patentanspruch 2 bietet eine vorteilhafte Grundlage für eine einfache Möglichkeit, den Druck des im Notfall ausgesteuerten Drucksignals abstufbar zu machen.

Eine Störung der Druckmittelzufuhr bzw. der Notfall liegt vor, wenn der Versorgungsdruck soweit abgefallen ist, daß die von ihm auf den Steuerkolben ausgeübte Kraft nicht mehr ausreicht, diesen gegen die von dem Druck des Verbraucherkreisvorrats auf den Steuerkolben ausgeübte Kraft in seiner ersten Stellung zu halten. Mittels eines Federelements nach dem Patentanspruch 3 ist es möglich, unter Vermeidung weitergehender Änderung auf einfache Weise den den Notfall definierenden Versorgungsdruckabfall einstellbar zu machen und so die Erfindung an unterschiedliche Einsatzbedingungen anzupassen.

Eine Ausgestaltung der Erfindung mit einem Steuerkolben nach dem Patentanspruch 6 bietet eine Möglichkeit, ihre Kompaktheit zusätzlich zu verdichten.

Die Erfindung läßt sich mit jeder geeigneten Art Ventileinrichtungen als erste und zweite Ventileinrichtung ausbilden. Ein einfache, aber auch kostengünstige, und daher vorteilhafte Ausgestaltung ergibt sich, wenn die erste Ventileinrichtung mit Sitzventilen, wie sinngemäß im Patentanspruch 7 angegeben, ausgeführt ist. Eine andere oder zusätzliche Möglichkeit einer einfachen, aber auch kostengünstigen, Ausgestaltung ergibt sich, wenn die zweite Ventileinrichtung mit Schieberventilen, wie sinngemäß im Patentanspruch 8 angegeben, ausgeführt ist. Eine einfache, aber auch kostengünstige Ausgestaltung des Rückschlagventils ist im Patentanspruch 5 angegeben.

Die Verschiebung des Stößels zwischen seiner ersten Stellung und seiner zweiten Stellung geschieht in der Grundausführung durch von außen angreifende Kräfte. Es liegt nahe, daß in diesem Fall der Stößel und seine Anordnung im Gehäuse und im Steuerkolben in geeigneter Weise ausgeführt sein müssen. Die Erfindung kann aber auch mit selbsttätiger Rückstellung bzw. selbsttätigem Halten in der ersten Stellung ausgeführt werden, wofür der Patentanspruch 9 eine vorteilhafte Lösung beschreibt.

Der Stößel kann auch nur oder zusätzlich nach dem Patentanspruch 4 ausgebildet sein. In diesem Fall wird er, gegebenenfalls, nur bzw. auch durch den Versorgungsdruck selbsttätig in seine erste Stellung zurückgestellt bzw. in dieser gehalten.

Die gleichen Wirkungen können durch andere geeignete Mittel, beispielsweise eine Federvorspannung des Stößels, erzielt werden.

Die Erfindung wird nachstehend anhand von in Zeichnungen dargestellten Ausführungsbeispielen erläutert.

Es zeigen:

**Fig. 1** eine Notsteuereinrichtung und

**Fig. 2** ausschnittsweise eine andere Ausbildung dieser Notsteuereinrichtung.

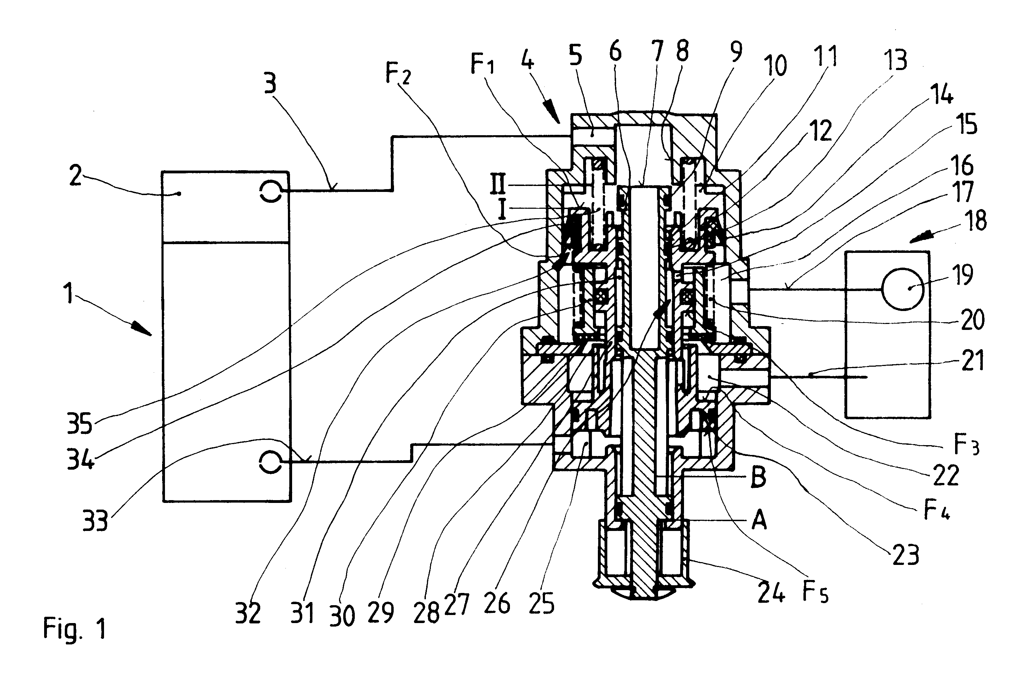

Fig. 1 stellt eine generell mit (4) bezeichnete Notsteuereinrichtung für wenigstens einen generell mit (18) bezeichneten druckmittelbetätigten Verbraucherkreis dar, die eine einem Verbraucherkreisvorrat (19) des Verbraucherkreises (18) vorgeschaltete Versorgungsleitung (3, 17) überwacht. Die Versorgungsleitung (3, 17) besteht aus einem mit einer Druckmittelquelle (2) verbundenen Zuführungsteil (3) und einem mit dem Verbraucherkreisvorrat (19) verbundenen Abführungsteil (17).

Die Notsteuereinrichtung (4) weist in einem nicht näher bezeichneten Gehäuse eine Vorratseingangskammer (10), die über den Zuführungsteil (3) mit dem Versorgungsdruck beaufschlagbar ist, und eine Vorratsauslaßkammer (16) auf, die über den Abführungsteil (17) mit dem Verbraucherkreisvorrat (19) verbunden ist.

Die Notsteuereinrichtung (4) weist in dem Gehäuse ferner eine mit einer Ansteuerleitung (33) verbundene Steuereingangskammer (25) und eine mit einer Aussteuerleitung (21) verbundene Steuerauslaßkammer (22) auf.

Die Notsteuereinrichtung (4) weist in dem Gehäuse außerdem einen zwischen zwei Stellung (I) und (II) verschiebbaren Steuerkolben (26) auf, der einerseits zwischen der Vorratseingangskammer (10) und der Vorratsauslaßkammer (16) und andererseits zwischen der Steuereingangskammer (25) und der Steuerauslaßkammer (22) angeordnet ist. Körperlich ist der Steuerkolben (26) als Doppelkolben mit einem zwischen der Vorratseingangskammer (10) und der Vorratsauslaßkammer (16) angeordneten ersten Kolbenteil (12) und einem zwischen der Steuereingangskammer (25) und der Steuerauslaßkammer (22) angeordneten zweiten Kolbenteil (23) ausgebildet. Dabei sind die Kolbenteile (12) bzw. (23) durch einen Kolbenschaft (27) verbunden, welcher die Vorratsauslaßkammer (16) und die Steuerauslaßkammer (22) durchdringt. In nicht näher dargestellter Weise kann der Steuerkolben auch auf jede andere geeignete Art ausgebildet sein.

Die Vorratseingangskammer (10) und die Vorratsauslaßkammer (16) sind über ein die Strömungsrichtung von der Vorratseingangskammer (10) zur Vorratsauslaßkammer (16) freigebendes und die Gegenrichtung sperrendes Rückschlagventil (32) verbunden. Das Rückschlagventil (32) ist dadurch geschaffen, daß ein zwischen der Vorratseingangskammer (10) und der Vorratsauslaßkammer (16) angeordnetes Dichtelement des Steuerkolbens (26), genauer: des ersten Kolbenteils (12), als Hutmanschette mit von der Vorratseingangskammer (10) zur Vorratsauslaßkammer (16) hin überströmbarer Dichtlippe (14) ausgebildet ist. Das Rückschlagventil kann jedoch in nicht dargestellter Weise auch auf jede andere geeignete Art gebildet sein.

Die Notsteuereinrichtung (4) weist in dem Gehäuse auch eine von dem Steuerkolben (26) steuerbare erste Ventileinrichtung (28, 29, 30) auf, welche die Steuerauslaßkammer (22) in der ersten Stellung (I) des Steuerkolbens (26) mit der Steuereingangskammer (25) und in der zweiten Stellung (II) des Steuerkolbens (26) mit der Vorratsauslaßkammer (16) verbindet.

Zur Bildung der ersten Ventileinrichtung (28, 29, 30) sind ein gehäusefester Ventilsitz (29), ein am Steuerkolben (26) ortsfester Ventilsitz (28) und ein Ventilkörper (30) vorgesehen. Der Ventilkörper (30) ist in der Vorratsauslaßkammer (16) auf dem Kolbenschaft (27) abgedichtet verschiebbar geführt und durch eine Schließfeder (20) in Richtung des Ventilsitzes (29) vorgespannt. Der Ventilsitz (28) ist an dem zweiten Kolbenteil (23) in der Steuerauslaßkammer (22) angeordnet. Der Ventilkörper (30) und der Ventilsitz (29) bilden ein die Verbindung zwischen der Vorratsauslaßkammer (16) und der Steuerauslaßkammer (22) kontrollierendes Ventil (29, 30), während der Ventilsitz (28) und der Ventilkörper (30) ein die Verbindung zwischen der Steuerauslaßkammer (22) und der Steuereinlaßkammer (25) kontrollierendes Ventil (28, 30) bilden. Der Ventilkörper (30) und die Ventilsitze (28 bzw. 29) sind so angeordnet, daß in der ersten Stellung (I) des Steuerkolbens (26) das Ventil (28, 30) geöffnet und das Ventil (29, 30) geschlossen und in der zweiten Stellung (II) des Steuerkolbens (26) das jeweils andere Ventil (29, 30 bzw. 28, 30) geöffnet bzw. geschlossen ist. Der Ventilsitz (28) ist in der ersten Stellung (I) des Steuerkolbens (26) um den Öffnungshub des Ventils (28, 30) von dem Ventilkörper (30) abgehoben und tritt mit diesem bei Verschiebung um den Öffnungshub in Richtung der zweiten Stellung (II) des Steuerkolbens (26) dichtend in Eingriff, anschließend diesen vom dem Ventilsitz (29) abhebend und das Ventil (29, 30) öffnend.

In nicht dargestellter Weise kann die erste Ventileinrichtung auch auf jede andere zweckdienliche Art ausgebildet sein.

In der ersten Stellung (I) liegt der Steuerkolben (26) in nicht näher beschriebener Weise an einem Gehäuseanschlag an. In der zweiten Stellung (II) ist Entsprechendes unter später näher beschriebenen Umständen möglich.

Der Steuerkolben (26) weist auch einen nicht näher bezeichneten hohlen Innenraum auf. Die Verbindung zwischen Steuereingangskammer (25) und Steuerauslaßkammer (22) bei geöffnetem Ventil (28, 30) erfolgt über diesen Innenraum und wenigstens einen Durchbruch im Kolbenschaft (27), wie dargestellt, aber nicht näher bezeichnet. In dem Innenraum ist, relativ zum Steuerkolben (26) und zum Gehäuse verschiebbar, ein Stößel (6) geführt, der eine Wirkfläche (7) aufweist, die einem Vorratseingang (5) zugekehrt ist, welcher der Verbindung zwischen Zuführungsteil (3) und Vorratseingangskammer (10) dient. Die Wirkfläche (7) ist dadurch dem Versorgungsdruck ausgesetzt. Der Stößel (6) ist zwischen einer ersten Stellung (A) und einer zweiten Stellung (B) verschiebbar, die in nicht näher angegebener Weise durch Gehäuseanschläge definiert sind. Die Bezugszeichen (A) und (B) der Zeichnung geben beispielhaft die Lagen des gleichen Teils des Stößels (6) in diesen Stellungen an.

Der Stößel (6) ist derart im Gehäuse angeordnet, daß an ihm von außen seiner Verschiebung dienende Kräfte angreifen können. Der Stößel (6) weist zu diesem Zweck an seinem der Wirkfläche (7) entgegengesetzten Ende einen als Bedienungsknopf (24) ausgebildeten von außen zugänglichen Teil auf.

Entsprechend seiner weiter oben näher beschriebenen Anordnung zwischen den Kammern (10, 16, 22, 25) und wegen der ebenfalls weiter oben beschriebenen Anordnung der ersten Ventileinrichtung (28, 29, 30) weist der Steuerkolben (26) diesen Kammern zugekehrte und daher mit dem Druck der jeweiligen Kammer beaufschlagte Wirkflächen $F_1$, $F_2$, $F_3$, $F_4$ und $F_5$ auf, von den $F_1$ und $F_2$ am ersten Kolbenteil (12), $F_4$ sowie $F_5$ am zweiten Kolbenteil (23) und $F_3$ am Kolbenschaft (27) angeordnet sind. Die der Vorratseingangskammer (10) zugekehrte Wirkfläche $F_1$ erstreckt sich zwischen der Dichtlippe (14) und einer Kolbenführung (11) am Umfang des Innenraums. Die der Vorratsauslaßkammer (16) zugekehrte Wirkfläche $F_2$ erstreckt sich von der Dichtlippe (14) bis zur nicht bezeichneten Abdichtung des Ventilkörpers (30) auf dem Kolbenschaft (27). Die Wirkfläche $F_3$ besteht aus einem der Steuerauslaßkammer (22) zugekehrten Teil, der sich zwischen den Ventilsitzen (29) und (28) erstreckt, und einem der Steuereingangskammer (25) zugekehrten Teil, der sich zwischen dem Ventilsitz (28) und einer anderen Kolbenführung des Stößels (6) am Umfang des Innenraumes erstreckt. $F_4$ liegt $F_3$ gegenüber. $F_4$ besteht aus einem der Steuerauslaßkammer (22) zugekehrten Teil, der sich vom Außendurchmesser (Abdichtung) des zweiten Kolbenteils (23) bis zum Ventilsitz (28) erstreckt, und einem der Steuereingangskammer (25) zugekehrten Teil, der sich von dem Ventilsitz (28) bis zum Innendurchmesser des Steuerkolbens (26) erstreckt. $F_5$ ist der Steuereingangskammer zugekehrt und gleich groß wie $F_4$.

$F_1$ ist wenigstens so groß wir $F_2$ und $F_3$ zusammen. Der der Steuerauslaßkammer (22) zugekehrte Teil von $F_4$ ist durch entsprechende Auslegung kleiner als jede der Wirkflächen $F_1$ und $F_2$. Der der Steuerauslaßkammer (22) zugekehrte Teil von $F_3$ ist vernachlässigbar klein. Infolge dieser Flächenauslegung ergibt sich ein Vorteil, auf den in der Funktionsbeschreibung näher eingegangen wird. Unter Verzicht auf diesen Vorteil können die Größen der genannten Flächen im Verhältnis zueinander auch anders ausgelegt werden. Alternativ kann beim Verzicht auf diesen Vorteil der zweite Kolbenteil (23) ganz entfallen. Es liegt auf der Hand, daß die erste Ventileinrichtung und der Steuerkolben dann entsprechend auszubilden sind.

Die Notsteuereinrichtung (4) weist ferner eine von dem Stößel (6) steuerbare zweite Ventileinrichtung (8, 9, 11, 13) auf, die in dessen zweiter Stellung (B) die Vorratseingangskammer (10) von dem Vorratseingang (5) und damit von dem Zuführungsteil (3) trennt und eine Verbindung zwischen Vorratsauslaßkammer (16) und Vorratseingangskammer (10) schafft und damit das Rückschlagventil (32) umgeht.

Die zweite Ventileinrichtung (8, 9, 11, 13) besteht aus zwei Ventilen (8, 9) und (11, 13). Diese Ventile werden nach Art von Schieberventilen von zwei mit axialem Abstand zueinander am Stößel (6) umlaufenden Abdichtungen (8 und 13) und zugeordneten Führungen gebildet.

Der Abdichtung (9) ist eine Gehäuseführung (8) zugeordnet, in die sie in der zweiten Stellung (B) des Stößels (6) dichtend eindringt und aus der sie in dessen erster Stellung (A) heraustritt. Die Gehäuseführung (8) ist mit dem Eindringbereich der Abdichtung (9) der Vorratseingangskammer (10) zugewandt und nimmt an ihrem anderen Ende die Mündung des Vorratseingangs (5) auf. Das Ventil (8, 9) kontrolliert daher die Verbindung zwischen Vorratseingangskammer (10) und Zuführungsteil (3).

Der Abdichtung (13) ist die Kolbenführung (11) im Innenraum des Steuerkolbens (26) zugeordnet, in die sie in der ersten Stellung (A) des Stößels (6) dichtend eindringt und aus der sie in dessen zweiter Stellung (B) heraustritt. Auf ihrer der Abdichtung (9) abgewandten Seite begrenzt die Abdichtung (13) eine im Stößel (6) angeordnete Schiebekammer (31), die über wenigstens einen Durchgang (15) im Steuerkolben (26) mit der Vorratsauslaßkammer (16) verbunden ist. Beim Heraustreten der Abdichtung (13) aus der Kolbenführung (11) wird die Schiebekammer (31) mit der Vorratseingangskammer (10) verbunden. Das Ventil (11, 13) kontrolliert daher mittels der Schiebekammer (31) und des Durchgangs (15) die Verbindung zwischen Vorratsauslaßkammer (16) und Vorratseingangskammer (10).

In nicht dargestellter Weise kann die zweite Ventileinrichtung auch auf jede andere zweckdienliche Art hergestellt sein.

Im bisher beschriebenen Umfang funktioniert die Notsteuereinrichtung (4) wie folgt.

Im Normalzustand ist der Versorgungsdruck im Zuführungsteil (3) und damit in der Vorratseingangskammer (10), abgesehen von einem durch den Strömungswiderstand des Rückschlagventils (32) bedingten, geringfügigen Überdruck, im wesentlichen gleich dem Druck des Verbraucherkreisvorrats (19). In diesem Zustand befinden sich der Steuerkolben (26) und der Stößel (6) in ihren ersten Stellungen (I) bzw. (A), ersterer insbesondere wegen des Flächenüberschusses von $F_1$ gegenüber $F_2$, letzterer unter der Einwirkung des Vorratsdrucks an sich. Von der ersten Ventileinrichtung (28, 29, 30) ist jetzt das Ventil (28, 30) offen und das Ventil (29, 30) geschlossen. Die Notsteuereinrichtung (4) befindet sich dabei in ihrer Betriebsstellung. Der Ansteuerleitung (33) zugeführte (Steuer-) Drucksignale werden jetzt über die Steuereingangskammer (25), das offene Ventil (28, 30) und die Steuerauslaßkammer (22) sowie die Aussteuerleitung (21) an den Verbraucherkreis (18) weitergeleitet.

Diese Drucksignale erzeugen auf der Wirkfläche $F_3$ eine Kraft auf den Steuerkolben (26), die aber durch die Größe von $F_1$ (mindestens $F_2 + F_3$) kompensiert wird.

Fällt nun der Versorgungsdruck, z.B. infolge einer Leckage in den Zuführungsteil (3), ab, so empfindet die Notsteuereinrichtung (4) diesen Abfall als Störung der Druckmittelzufuhr bzw. als Notfall, wenn der restliche Versorgungsdruck über die Wirkfläche $F_1$ dem entgegengesetzt über die kleinere Wirkfläche $F_2$ auf den Steuerkolben (26) wirkenden Druck des Verbraucherkreisvorrats (19) nicht mehr das Gleichgewicht hält. Der Steuerkolben (26) wird in diesem Fall aus seiner ersten Stellung (I) in Richtung seiner zweiten Stellung (II) verschoben. Dabei werden zunächst das Ventil (28, 30) geschlossen und anschließend das Ventil (29, 30) geöffnet. Dadurch kann Druckmittel aus dem Verbraucherkreisvorrat (19) über die Vorratsauslaßkammer (16) und die Steuerauslaßkammer (22) in die Aussteuerleitung (21) strömen und in dieser sowie in der Steuerauslaßkammer (22) ein Drucksignal erzeugen. Da die Steuereingangskammer (25) an diesem Drucksignal wegen des geschlossenen Ventils (28, 30) nicht teilhat, bleibt der Steuerkolben (26) hinsichtlich desselben nicht ausgeglichen. Vielmehr erzeugt der Druck des Drucksignals auf dem der Steuerauslaßkammer (22) zugekehrten Teil der Wirkfläche $F_3$ am Steuerkolben (26) eine Kraft, die der vom Versorgungsdruck erzeugten Kraft gleichgerichtet und der vom Druck des Verbraucherkreisvorrats (19) erzeugten Kraft entgegengesetzt ist. Bildet sich zwischen diesen Kräften ein Gleichgewicht, so kehrt der Steuerkolben (26) aus der Stellung, die er bei geöffnetem Ventil (29, 30) eingenommen hatte, in Richtung seiner ersten Stellung (I) in eine Abschlußstellung zurück, in der beide Ventile (28, 30) bzw. (29, 30) geschlossen sind. Bei weiterem Abfall des Versorgungsdrucks wiederholt sich dieses Spiel mit dem Ergebnis, daß sich der Druck des Drucksignals in Aussteuerleitung (21) und Steuerausgangskammer (22) erhöht. Dieses Spiel wiederholt sich, bis der Druck des Drucksignals im wesentlichen den Druck des Verbraucherkreisvorrats (19) erreicht hat. Ist der Versorgungsdruck dann völlig abgefallen, stellt die Abschlußstellung die zweite Stellung (II) des Steuerkolbens (26) dar. Ist anschließend noch ein weiterer Druckabfall des Versorgungsdrucks möglich, so kann sich am Steuerkolben (26) kein Kräftegleichgewicht mehr einstellen, mit dem Ergebnis, daß ein gehäusefester Anschlag zur Definition der zweiten Stellung (II) des Steuerkolbens (26) erforderlich ist.

Infolge der vorstehend beschriebenen Funktion steigt der Druck des Drucksignals in Aussteuerleitung (21) und Steuerausgangskammer (22) bis zum Erreichen etwa des Drucks des Verbraucherkreisvorrats (19) mit dem Abfall des Versorgungsdrucks. Mit anderen Worten: Der Druck des Drucksignals verhält sich vom Eintritt des Notfalls bis zum Erreichen des Drucks des Verbraucherkreisvorrats (19) zum restlichen Versorgungsdruck im wesentlichen umgekehrt proportional. Dies hat den Vorteil, daß der Verbraucherkreis (18) im Notfall nicht schlagartig, sondern angepaßt an die Höhe des Versorgungsdruckabfalls, abgestuft in seine Notfunktion gesteuert wird.

Mit der ersten Aussteuerung eines Drucksignals aus dem Verbraucherkreisvorrat (19) in die Aussteuerleitung (21) ist die Notsteuereinrichtung (4) insgesamt in eine Notstellung gestellt worden. Der Stößel (6) ist dabei unter der Einwirkung des Versorgungsdrucks auf seine Wirkfläche (7) in seiner ersten Stellung (A) verblieben.

Steigt der Versorgungsdruck, etwa nach Beseitigung der Leckage, wieder an, so laufen die soeben beschriebenen Funktionen in umgekehrter Reihenfolge entsprechend ab. Das bedeutet, daß der Druck des Drucksignals in der Aussteuerleitung (21) und der Steuerauslaßkammer (22) zunächst abgestuft abgebaut wird, und zwar über das geöffnete Ventil (28, 30), die Steuereingangskammer (25) und die Ansteuerleitung (33). Etwa wenn der Versorgungsdruck wieder den Wert erreicht, der zur Umstellung der Notsteuereinrichtung (4) in die Notstellung geführt hatte, wird der Steuerkolben (26) in seine erste Stellung (I) zurückgeschoben und damit die Notsteuereinrichtung (4) in ihre Normalstellung zurückgestellt.

Befindet sich die Notsteuereinrichtung (4) in ihrer Notstellung, so kann sie mittels des Stößels (6) und der zweiten Ventileinrichtung (8, 9, 11, 13) auch bei abgefallenem Versorgungsdruck in ihre Betriebsstellung zurückgestellt werden. Zu diesem Zweck wird der Stößel (6) durch eine von außen, d.h. am Bedienungsknopf (24), angreifende Kraft aus seiner ersten Stellung (A) in seine zweite Stellung (B) verschoben mit der Folge, daß die Vorratseingangskammer (10) von dem Zuführungsteil (3) getrennt und mit Druck des Verbraucherkreisvorrats (19) beaufschlagt wird, welcher die Rolle des Versorgungsdrucks in der Vorratseingangskammer (10) übernimmt und den Steuerkolben (26) in seine erste Stellung (I) sowie die Notsteuereinrichtung (4) in ihre Betriebsstellung zurückstellt.

Soll nun die Notsteuereinrichtung (4) im bisher beschriebenen Umfang wieder in die Notstellung zurückgestellt werden, so geschieht dies, indem der Stößel (6) mittels einer von außen, d.h. am Bedienungsknopf (24), angreifenden entgegengerichteten Kraft in seine erste Stellung (A) zurückgeschoben wird.

Aufgrund der beschriebenen Funktion wirken der Stößel (6) und die zweite Ventileinrichtung (8, 9, 11, 13) als Löseeinrichtung. Durch Betätigung der Löseeinrichtung wird der Verbraucherkreis (18) trotz abgefallenen Versorgungsdrucks wie im Normalzustand betätigbar.

Über den bisher beschriebenen Umfang hinaus weist das Ausführungsbeispiel zwei besondere Ausgestaltungen auf.

Zunächst ist zu erwähnen, daß von den die Schiebekammer (31) begrenzenden Flächen des Stößels (6) die in dessen erster Stellung (A), d.h. abwärts, beaufschlagte, größer als die entgegengesetzt, d.h. aufwärts, beaufschlagte ist. Druck im Verbraucherkreisvorrat (19) vorausgesetzt, wirkt deshalb am Stößel (6) ständig aus diesem Druck eine resultierende Kraft in Richtung dessen erster Stellung (A). Diese hat auch bei abgefallenem Versorgungsdruck eine selbsttätige Rückstellung des Stößels (6) in seine erste Stellung (A) und damit eine selbsttätige Rückstellung der Notsteuereinrichtung (4) in die Notstellung zur Folge.

Außerdem ist zu erwähnen, daß der Steuerkolben (26) in Wirkrichtung des in der Vorratseingangskammer (10) herrschenden Versorgungsdrucks noch durch ein Federelement (35) vorgespannt ist. Dadurch wird der Versorgungsdruckabfall, bei dem die Notsteuereinrichtung (4) die Störung der Druckmittelzufuhr bzw. den Notfall empfindet, vergrößert, mit anderen Worten: der zugehörige restliche Versorgungsdruck zu geringeren Werten verschoben. Die Anordnung des Federelements (35) ermöglicht, unter Vermeidung weitergehender Änderungen, beispielsweise der Flächenverhältnisse am Steuerkolben (26), die Notsteuereinrichtung (4) an unterschiedliche Einsatzbedingungen anzupassen. Die Anordnung des Federelements (35) ermöglicht auch, mit einer kleineren Größe von $F_1$ als $F_2$ und $F_3$ zusammen auszukommen. Die zweite Stellung (II) des Steuerkolbens (26) kann in diesem Fall durch vollständige oder teilweise Zusammendrückung des Federelements (35), je nach dessen Auslegung, definiert sein.

Man kann sich den Verbraucherkreis (18) als Anhängerbremsanlage vorstellen, die über eine mit einer durch (1) symbolisierten Motorfahrzeugbremsanlage verbindbare Vorratsleitung versorgbar und über eine von der Motorfahrzeugbremsanlage (1) zum Verbraucherkreis (18) führende Bremsleitung steuerbar ist, wobei der Zuführungsteil (3) der Versorgungsleitung (3, 17) die Vorratsleitung ist und wobei die Ansteuerleitung (33) und die Aussteuerleitung (21) die Bremsleitung bilden.

Die Druckmittelquelle (2) ist dabei eine Druckbeschaffungseinrichtung der Motorfahrzeugbremsanlage (1). In diesem Falle stellt das Ausführungsbeispiel eine Notsteuereinrichtung mit integrierter Löseeinrichtung für eine Anhängerbremsanlage dar.

Für diesen Einsatzfall ist die beschriebene Aussteuerung des Drucksignals im Notfall mit abgestuftem Druck besonders vorteilhaft, weil dadurch bei Eintritt des Notfalls eine schlagartige Vollbremsung des Anhängers mit allen daraus resultierenden Folgen für die Verkehrssicherheit vermieden wird. Für diesen Einsatzfall ist ferner das Vorhandensein der Wirkfläche (7) am Stößel (6) vorteilhaft, weil dadurch bei einer Wiederkehr des Versorgungsdruckes bzw. bei einer Erst-Befüllung der Anhängerbremsanlage die Löseeinrichtung aus der etwa eingenommenen Lösestellung in jedem Fall in ihre Normalstellung umgestellt wird.

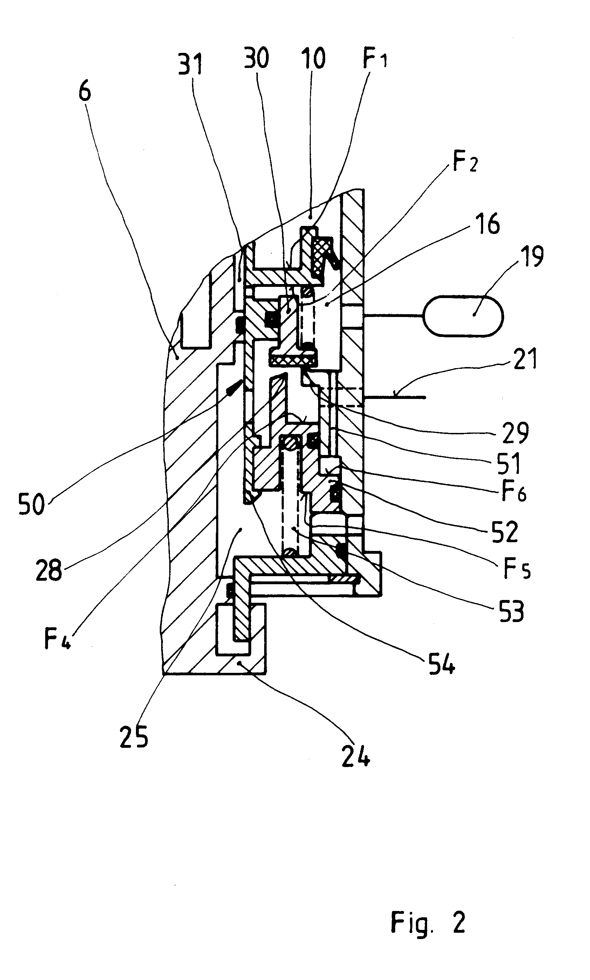

Die in Fig. 2 dargestellte Notsteuereinrichtung weicht in den nachstehend erläuterten Punkten von derjenigen nach Fig. 1 ab und entspricht jener im übrigen.

Der hier mit (50) bezeichnete Steuerkolben ist entgegen der Wirkrichtung des in der Vorratseingangskammer (10) herrschenden Versorgungsdrucks durch ein Federelement (53) vorgespannt und hinsichtlich des Drucks des Verbraucherkreisvorrats (19) ausgeglichen. Zum zuletzt genannten Zweck weist der Steuerkolben (50) an seinem hier mit (52) bezeichneten zweiten Kolbenteil außer den Wirkflächen $F_4$ und $F_5$ eine Wirkfläche $F_6$ auf, die über einen Kanal (51) mit dem Druck des Verbraucherkreisvorrats (19) aus der Vorratsauslaßkammer (16) beaufschlagt ist. Die Wirkfläche $F_6$ ist genauso groß wie die Wirkfläche $F_2$ und liegt dieser gegenüber. Deshalb gleicht der auf ihr herrschende Druck des Verbraucherkreisvorrats (19) die Kraft, die er über die Wirkfläche $F_2$ auf den Steuerkolben (50) ausübt, aus. $F_5$ ist größer als $F_4$. Die deshalb im Normalzustand von dem (Steuer-) Drucksignal auf den Steuerkolben (50) zusätzlich ausgeübte Kraft wird aber, wie die über $F_3$ ausgeübte, durch die Kraft des Versorgungsdrucks auf $F_1$ kompensiert.

Diese Notsteuereinrichtung empfindet die Störung der Druckmittelzufuhr bzw. den Notfall dann, wenn die Kraft des Federelements (53) die von dem Versorgungsdruck auf den Steuerkolben (50) ausgeübte Kraft überwindet. Auch diese Notsteuereinrichtung steuert ein Drucksignal mit abgestuftem Druck aus, solange die vom Federelement (53), vom Versorgungsdruck und von Drucksignal auf den Steuerkolben (50) ausgeübten Kräfte diesen im Gleichgewicht halten können.

Dieses Ausführungsbeispiel verhält sich, verglichen mit dem vorigen Ausführungsbeispiel in der Ausgestaltung mit Federelement (35) vorteilhaft, wenn bei in der Notstellung stehender Notsteuereinrichtung der Druck des Versorgungskreisvorrats (19), etwa durch eine Leckage in dem Abführungsteil (17), abfällt. Das frühere Ausführungsführungsbeispiel wird nach einem ausreichend hohen Abfall des Drucks im Verbraucherkreisvorrat (19) durch das Federelement (35) schlagartik in seine Betriebsstellung umgestellt, wodurch ebenso schlagartig das Drucksignal in der Aussteuerleitung (21) verschwindet und der Verbraucherkreis (18) aus seiner Notfunktion geschaltet wird. Dies kann erhebliche Gefahren zur Folge haben, etwa wenn der Verbraucherkreis (18) die Anhängerbremsanlage eines geparkten Anhängers ist, dessen Bremsen in diesem Falle gelöst werden. Demgegenüber wird das Ausführungsbeispiel nach Fig. 2 durch das Federelement (53) unabhängig vom Druck des Verbraucherkreisvorrats (19) in seiner Notstellung gehalten. Das bedeutet, daß das Drucksignal und damit eine Notfunktion des Verbraucherkreises, etwa eine Restbremsung des Anhängers, solange aufrechterhalten bleiben wie überhaupt noch ein Druck im Verbraucherkreisvorrat (19) vorhanden ist.

Das Ausführungsbeispiel zeigt noch, daß das zweite Kolbenteil (52) durch eine Schnappverbindung mit dem hier mit (54) bezeichneten Kolbenschaft verbunden ist. Insoweit und im übrigen gelten für dieses Ausführungsbeispiel die zum vorigen Ausführungsbeispiel gegebenen Erläuterungen identisch oder entsprechend mit.

Der Fachmann erkennt, daß sich der Schutzbereich der vorliegenden Erfindung nicht in den Ausführungsbeispielen erschöpft, sondern alle Ausgestaltungen erfaßt, deren Merkmale sich den Patentansprüchen unterordnen.

## Patentansprüche

1. Notsteuereinrichtung (4) für wenigstens einen druckmittelbetätigten Verbraucherkreis (18), die eine einem Verbraucherkreisvorrat (19) vorgeschaltete, der Druckmittelzufuhr dienende, Versorgungsleitung (3, 17) überwacht und bei einer Störung der Druckmittelzufuhr ein Drucksignal zum Verbraucherkreis (18) aussteuert, mit den Merkmalen:

   a) Es sind eine über einen mit einer Druckmittelquelle (2) verbundenen Zuführungsteil (3) der Versorgungsleitung mit dem Versorgungsdruck beaufschlagbare Vorratseingangskammer (10) und eine mit dem Verbraucherkreisvorrat (19) verbundene Vorratsauslaßkammer (16) vorgesehen;

   b) die Vorratseingangskammer (10) und die Vorratsauslaßkammer (16) sind über ein die Strömungsrichtung von der Vorratseingangskammer (10) zur Vorratsauslaßkammer (16) freigebendes und die Gegenrichtung sperrendes Rückschlagventil (32) verbunden;

   c) es sind eine mit einer Ansteuerleitung (33) verbundene Steuereingangskammer (25) und eine mit einer Aussteuerleitung (21) verbundene Steuerauslaßkammer (22) vorgesehen;

d) es ist ein zwischen zwei Stellungen (I, II) verschiebbarer Steuerkolben (26, 50) vorgesehen, der einerseits zwischen der Vorratseingangskammer (10) und der Vorratsauslaßkammer (16) angeordnet ist;

e) es ist eine von dem Steuerkolben (26, 50) steuerbare erste Ventileinrichtung (28, 29, 30) vorgesehen, welche die Steuerauslaßkammer (22) in der ersten Stellung (I) des Steuerkolbens (26, 50) mit der Steuereingangskammer (25) und in dessen zweiter Stellung (II) mit der Vorratsauslaßkammer (16) verbindet;

gekennzeichnet durch die Merkmale:

f) Der Steuerkolben (26, 50) weist einen hohlen Innenraum auf;

g) in dem hohlen Innenraum des Steuerkolbens (26, 50) ist ein Stößel (6) geführt;

h) der Stößel (6) ist wenigstens durch von außen angreifende Kräfte zwischen einer ersten Stellung (A) und einer zweiten Stellung (B) verschiebbar;

i) es ist eine von dem Stößel (6) steuerbare zweite Ventileinrichtung (8, 9, 11, 13) vorgesehen, die in dessen zweiter Stellung (B) die Vorratseingangskammer (10) von den Zuführungsteil (3) trennt und eine Verbindung zwischen Vorratsauslaßkammer (16) und Vorratseingangskammer (10) schafft.

2. Notsteuereinrichtung nach Anspruch 1, dadurch gekennzeichnet, daß der Steuerkolben (26) auch zwischen der Steuereingangskammer (25) und der Stuerauslaßkammer (22) angeordnet ist.

3. Notsteuereinrichtung nach einem der Ansprüche 1 oder 2, dadurch gekennzeichnet, daß der Steuerkolben (26) in Wirkrichtung des in der Vorratseingangskammer (10) herrschenden Versorgungsdrucks durch ein Federelement (35) vorgespannt ist.

4. Notsteuereinrichtung nach einem der vorhergehenden Ansprüche, dadurch gekennzeichnet, daß der Stößel (6) eine Wirkfläche (7) aufweist, auf der er vom Versorgungsdruck in Richtung seiner ersten Stellung (A) vorgespannt ist.

5. Notsteuereinrichtung nach einem der vorhergehenden Ansprüche, dadurch gekennzeichnet, daß zur Herstellung des Rückschlagventils (30) ein zwischen der Vorratseingangskammer (10) und der Vorratsauslaßkammer (16) angeordnetes Dichtelement des Steuerkolbens (26, 50) als Hutmanschette mit von der Vorratseingangskammer (10) zur Vorratsauslaßkammer (16) hin überströmbarer Dichtlippe (14) ausgebildet ist.

6. Notsteuereinrichtung nach einem der vorhergehenden Ansprüche, dadurch gekennzeichnet, daß der Steuerkolben (26, 50) aus einem zwischen der Vorratseingangskammer (10) und der Vorratsauslaßkammer (16) angeordneten ersten Kolbenteil (12) und einem zwischen der Steuereingangskammer (25) und der Steuerauslaßkammer (22) angeordneten zweiten Kolbenteil (23, 52) besteht, die durch einen Kolbenschaft (27, 54) verbunden sind, welcher die Vorratsauslaßkammer (16) und die Steuerauslaßkammer (22) durchdringt.

7. Notsteuereinrichtung nach Anspruch 6, dadurch gekennzeichnet, daß die erste Ventileinrichtung (28, 29, 30) folgende Merkmale aufweist:

a) Es ist ein gehäusefester Ventilsitz (29) vorgesehen;

b) auf dem Kolbenschaft (27, 54) ist in der Vorratsauslaßkammer (16) ein Ventilkörper (30) abgedichtet verschiebbar geführt, der durch eine Schließfeder (20) in Richtung des Ventilsitzes (29) zur Bildung eines Ventils (29,30) vorgespannt ist, welches in der ersten Stellung (I) des Steuerkolbens (26, 50) geschlossen ist.

c) an dem zweiten Kolbenteil (23, 52) ist ein Ventilsitz (28) angeordnet, welcher, mit dem Ventilkörper (30) ein Ventil (28, 30) bildend, in der ersten Stellung (I) des Steuerkolbens (26, 50) um dessen Öffnungshub von dem Ventilkörper (30) abgehoben ist und bei Verschiebung um den Öffnungshub in Richtung der zweiten Stellung (II) des Steuerkolbens (26, 50) mit dem Ventilkörper (30) in Eingriff tritt und anschließend diesen von dem Ventilsitz (29) abhebt.

8. Notsteuereinrichtung nach einem der vorhergehenden Ansprüche, dadurch gekennzeichnet, daß im Stößel (6) eine über wenigstens einen Durchgang (15) im Steuerkolben (26, 50) mit der Vorratsauslaßkammer (16) verbundene Schiebekammer (31) angeordnet ist, und daß die zweite Ventileinrichtung (8, 9, 11, 13) folgende Merkmale aufweist:

a) Eine am Stößel (6) angeordnete Abdichtung (9) dringt in dessen zweiter Stellung (B) dichtend in eine Gehäuseführung (8) ein, in die außerhalb des Eindringbereichs der Abdichtung (9) ein mit dem Zuführungsteil (3) der Versorgungsleitung (3, 17) verbundener Vorratseingang (5) mündet;

b) in axialem Abstand zu der Abdichtung (9) ist am Stößel (6) eine Abdichtung (13) angeordnet, die in Verbindung mit einer zugeordneten Kolbenführung (11) im Innenraum des Steuerkolbens (26, 50) in der ersten Stellung (A) des Stößels (6) die Schiebekammer (31) gegen die Vorratseingangskammer (10) abdichtet und in dessen zweiter Stellung (B) eine Verbindung zwischen der Schiebekammer (31) und der Vorratseingangskammer (10) schafft.

9. Notsteuereinrichtung nach Anspruch 8, dadurch gekennzeichnet, daß von den die Schiebekammer (31) begrenzenden Flächen des Stößels (6) die in Richtung dessen erster Stellung (A) beaufschlagte größer als die entgegengesetzt beaufschlagte ist.

10. Notsteuereinrichtung nach einem der vorhergehenden Ansprüche, dadurch gekennzeichnet, daß der Verbraucherkreis (18) eine über eine mit einer Motorfahrzeugbremsanlage (1) verbindbare Vorratsleitung versorgbare und über eine von der Motorfahrzeugbremsanlage (1) zum Verbraucherkreis (18) führende Bremsleitung steuerbare Anhängerbremsanlage ist, daß der Zuführungsteil (3) der Versor-Versorgungsleitung (3, 17) die Vorratsleitung ist und daß die Ansteuerleitung (33) und die Aussteuerleitung (21) die Bremsleitung bilden.

11. Notsteuereinrichtung nach einem der Ansprüche 1 bis 2 oder 4 bis 10, dadurch gekennzeichnet, daß der Steuerkolben (50) entgegen der Wirkrichtung des in der Vorratseingangskammer (10) herrschenden Versorgungsdrucks durch ein Federelement (53) vorgespannt und hinsichtlich des Drucks des Verbraucherkreisvorrats (19) ausgeglichen ist.

**Claims**

1. An emergency control device (4) for at least one pressure medium-operated load circuit (18), which monitors a supply line (3, 12) connected upstream of a load circuit reservoir (19) and serving for the supply of pressure medium, and in the event of a disruption in the pressure medium supply emits a pressure signal to the load circuit (18), having the following features:
   a) a reservoir input chamber (10), which can be pressurized with the supply pressure by way of a feed part (3) of the supply line connected to a source of pressure medium (2), and a reservoir outlet chamber (16) connected to the load circuit reservoir (19) are provided;

   b) the reservoir inlet chamber (10) and the reservoir outlet chamber (16) are connected by way of a non-return valve (32) which unblocks the flow direction from the reservoir inlet chamber (10) to the reservoir outlet chamber (16) and blocks the reverse direction;
   c) a control input chamber (25) connected to a input control line (33) and a control output chamber (22) connected to an output control line (21) are provided;
   d) a control piston (26, 50) displaceable between two positions (I, II) is provided, which is arranged at one end between the reservoir inlet chamber (10) and the reservoir outlet chamber (16);
   e) a first valve arrangement (28, 29, 30) controllable by the control piston (26, 50) is provided, which connects the control output chamber (22) in the first position (I) of the control piston (26, 30) to the control input chamber (25) and in the second position (II) of the control piston connects the control output chamber to the reservoir outlet chamber (16);
   characterized by the features:
   f) the control piston (26, 50) has a hollow inner space;
   g) a plunger (6) is guided in the hollow inner space of the control piston (26, 50);
   h) the plunger (6) is displaceable at least by forces acting from the outside between a first position (A) and a second position (B);
   i) a second valve arrangement (8, 9, 11, 13) controllable by the plunger (6) is provided, which in the second position (B) of the plunger separates the reservoir inlet chamber (10) from the feed part (3) and produces a connection between the reservoir outlet chamber (16) and reservoir inlet chamber (10).

2. An emergency control device according to claim 1, characterized in that the control piston (26) is also arranged between the control input chamber (25) and the control output chamber (22).

3. An emergency control device according to one of claims 1 or 2, characterized in that the control piston (26) is biassed by a spring element (35) in the effective direction of the supply pressure prevailing in the reservoir inlet chamber (10).

4. An emergency control device according to one of the preceding claims, characterized in that the plunger (6) has an effective face (7) by which it is biassed by the supply pressure in the direction of its first position (A).

5. An emergency control device according to one of the preceding claims, characterized in that, to produce the non-return valve (30), a sealing element of the control piston (26, 50) arranged between the reservoir inlet chamber (10) and the reservoir outlet chamber (16) is in the form of a collar with a sealing lip (14) over which medium is able to flow from the reservoir inlet chamber (10) towards the reservoir outlet chamber (16).

6. An emergency control device according to one of the preceding claims, characterized in that the control piston (26, 50) consists of a first piston part (12) arranged between the reservoir inlet chamber (10) and the reservoir outlet chamber (16) and a second piston part (23, 52) arranged between the control input chamber (25) and the control output chamber (22), which parts are connected by a piston shaft (27, 54) which passes through the reservoir outlet chamber (16) and the control output chamber (22).

7. An emergency control device according to claim 6, characterized in that the first valve arrangement (28, 29, 30) has the following features:
a) a valve seat (29) fixed in the housing is provided;
b) on the piston shaft (27, 54) there is displaceably guided in a sealed manner in the reservoir outlet chamber (16) a valve body (30) which is biassed by a closing spring (20) in the direction of the valve seat (29) to form a valve (29, 30), which valve is closed in the first position (I) of the control piston (26, 50);
c) on the second piston part (23, 52) there is arranged a valve seat (28) which, forming a valve (28, 30) with the valve body (30), in the first position (I) of the control piston (26, 50) is lifted from the valve body (30) by its opening stroke and on being displaced by the opening stroke towards the second position (II) of the control piston (26, 50) engages the valve body (30) and subsequently lifts this away from the valve seat (29).

8. An emergency control device according to one of the preceding claims, characterized in that in the plunger (6) there is arranged a slide chamber (31) connected by way of at least one passage (15) in the control piston (26, 50) to the reservoir outlet chamber (16), and the second valve arrangement (8, 9, 11, 13) comprises the following features:
a) a seal (9) arranged on the plunger (6) enters in the second position (B) thereof into a housing guide (8) to form a seal, into which housing guide a reservoir inlet (5) connected to the feed part (3) of the supply line (3, 17) opens beyond the penetration range of the seal (9);
b) spaced axially from the seal (9) there is arranged on the plunger (6) a seal (13) which, in conjunction with an associated piston guide (11) in the inner space of the control piston (26, 50), in the first position (A) of the plunger (6) seals the slide chamber (31) from the reservoir inlet chamber (10), and in the second position (B) thereof produces a connection between the slide chamber (31) and the reservoir inlet chamber (10).

9. An emergency control device according to claim 8, characterized in that of the faces of the plunger (6) bounding the slide chamber (31), the face pressurized in the direction of the first position (A) thereof is larger than the face pressurized in the opposite direction.

10. An emergency control device according to one of the preceding claims, characterized in that the load circuit (18) is a trailer brake system arranged to be supplied by way of a reservoir line that can be connected to a motor vehicle brake system (1) and arranged to be controlled by way of a brake line leading from the motor vehicle brake system (1) to the load circuit (18), that the feed part (3) of the supply line (3, 17) is the reservoir line, and the input control line (33) and the output control line (21) form the brake line.

11. An emergency control device according to one of claims 1 to 2 or 4 to 10, characterized in that the control piston (50) is biassed by a spring element (53) against the effective direction of the supply pressure prevailing in the reservoir inlet chamber (10) and is balanced with respect to the pressure of the load circuit reservoir (19).

**Revendications**

1. Dispositif de commande de secours (4) pour au moins un circuit de système utilisateur (18) actionnable par fluide de pression, ce dispositif surveillant une conduite d'alimentation (3, 17), laquelle est située en amont d'une réserve du circuit utilisateur et sert à l'amenée de fluide de pression, et émettant en tant que commande, dans le cas d'un dérangement de l'amenée de fluide de pression, un signal destiné au circuit utilisateur (18), ce dispositif présentant les caractéristiques suivantes :

a) il est prévu une chambre d'entrée de réserve (10) pouvant être exposée à la pression d'alimentation par l'intermédiaire d'une partie amenée (3) de la conduite d'alimentation reliée à une source de fluide de pression (2), et une chambre de décharge de réserve (16) reliée à la réserve (19) du circuit utilisateur;

b) la chambre d'entrée de réserve (10) et la chambre de décharge de réserve (16) sont reliées par l'intermédiaire d'une soupape antiretour (32) autorisant l'écoulement dans le sens allant de la chambre d'entrée de réserve (10) vers la chambre de décharge de réserve (16) et interdisant l'écoulement dans le sens opposé;

c) il est prévu une chambre d'entrée de commande (25) reliée à une conduite d'amenée de commande (33) et une chambre de décharge de commande (22) reliée à une conduite de sortie de commande (21);

d) il est prévu un piston de commande (26, 50) déplaçable entre deux positions (I, II), agencé entre la chambre d'entrée de réserve (10) et la chambre de décharge de réserve (16);

e) il est prévu un premier dispositif de soupape (28, 29, 30) qui peut être commandé par le piston de commande (26, 50) et qui, dans la première position (I) du piston de commande (26, 50), relie la chambre de décharge de commande (22) à la chambre d'entrée de commande (25), et, dans la deuxième position (II) du piston de commande, la relie à la chambre de décharge de réserve (16);

caractérisé par les caractéristiques suivantes :

f) le piston de commande présente une cavité intérieure;

g) un taquet (6) est guidé dans la cavité du piston de commande (26, 50);

h) le taquet (6) peut être déplacé, au moins par des forces l'attaquant de l'extérieur, entre une première position (A) et une deuxième position (B);

i) il est prévu un deuxième dispositif de vanne (8, 9, 11, 13) qui peut être commandé par le taquet (6) et qui, lorsque le taquet est à sa deuxième position (B), sépare la chambre d'entrée de réserve (10) de la partie amenée (3) et établit une communication entre chambre de décharge de réserve (16) et chambre d'entrée de réserve (10).

2. Dispositif de commande de secours selon revendication 1, caractérisé par le fait que le piston de commande (26) est également agencé entre la chambre d'entrée de commande (25) et la chambre de décharge de commande (22).

3. Dispositif de commande de secours selon l'une des revendications 1 ou 2, caractérisé par le fait que le piston de commande (26) est précontraint par un élément élastique (35), dans la direction d'action de la pression d'alimentation régnant dans la chambre d'entrée de réserve (10).

4. Dispositif de commande de secours selon l'une des revendications précédentes, caractérisé par le fait que le taquet (6) présente une surface active (7) par laquelle la pression d'alimentation le précontraint en direction de sa première position (A).

5. Dispositif de commande de secours selon l'une des revendications précédentes, caractérisé par le fait que, pour réaliser la soupape antiretour (30), un élément d'étanchéité du piston de commande (26, 50), situé entre la chambre d'entrée de réserve (10) et la chambre de décharge de réserve (16), est réalisé en tant que manchette-chapeau avec lèvre d'étanchéité (14) autorisant un écoulement de la chambre d'entrée de réserve (10) vers la chambre de décharge de réserve (16).

6. Dispositif de commande de secours selon l'une des revendications précédentes, caractérisé par le fait que le piston de commande (26, 50) est constitué par une première partie (12) agencée entre la chambre d'entrée de réserve (10) et la chambre de décharge de réserve (16) et par une deuxième partie de piston (23, 52) agencée entre la chambre d'entrée de commande (25) et la chambre de décharge de commande (22), ces parties de piston étant reliées par une tige (27, 54) qui traverse la chambre de décharge de réserve (16) et la chambre de décharge de commande (22).

7. Dispositif de commande de secours selon revendication 6, caractérisé par le fait que le premier dispositif de soupape (28, 29, 30) présente les caractéristiques suivantes :

a) il est prévu un siège de soupape (29) solidaire du corps;

b) dans la chambre de décharge de réserve (16), un organe obturateur (30) est guidé à coulissement étanche sur la tige de piston (27, 54) et est précontraint, par un ressort de fermeture (20), dans la direction du siège de soupape (29) afin de former une soupape (29, 30) qui est fermée dans la première position (I) du piston de commande (26, 50);

c) sur la deuxième partie de piston (23, 52) est agencé un siège de soupape (28) qui, en formant une soupape (28, 30) avec l'organe obturateur (30), est décollé de l'organe obturateur (30), cela de la course d'ouverture du piston de commande (26, 50) dans la première position (I) de celui-ci, et qui vient en prise avec l'organe obturateur (30) lors d'un déplacement égal à la course d'ouverture en direction de la deuxième position (II) du piston de commande (26, 50), puis décolle ledit organe obturateur dudit siège de soupape (29).

8. Dispositif de commande de secours selon l'une des revendications précédentes, caractérisé par le fait qu'une chambre de coulissement (31) reliée à la chambre de décharge de réserve (16) par au moins un passage (15) dans le piston de commande (26, 50) est aménagée dans le taquet (6), et par le fait que le deuxième dispositif de soupape (8, 9, 11, 13) présente les caractéristiques suivantes :

a) un organe d'étanchéité (9) agencé sur le taquet (6) pénètre, lorsque ce dernier est à sa deuxième position (B), dans un guide (8) du corps, cela avec étanchéité, une entrée (5) de la réserve reliée à la partie amenée (3) de la conduite d'alimentation (3, 17) débouchant dans ledit guide, en dehors de la zone de pénétration de l'organe d'étanchéité (9);

b) à distance axiale de l'organe d'étanchéité (9) est agencé, sur le taquet (6), un organe d'étanchéité (13) qui, en combinaison avec un guide de piston (11) conjugué dans le volume intérieur du piston de commande (26, 50), réalise l'étanchéité de la chambre de coulissement (31) par rapport à la chambre d'entrée de réserve (10), cela dans la première position (A) du taquet (6), et établit une communication entre la chambre de coulissement (31) et la chambre d'entrée de réserve (10) lorsque le taquet est à sa deuxième position (B).

9. Dispositif de commande de secours selon revendication 8, caractérisé par le fait que, parmi les surfaces du taquet (6) qui délimitent la chambre de coulissement (31), celle qui est sollicitée en direction de sa première position (A) est plus grande que celle sollicitée dans la direction opposée.

10. Dispositif de commande de secours selon l'une des revendications précédentes, caractérisé par le fait que le circuit utilisateur (18) est une installation de freinage de remorque pouvant être alimentée par une conduite de réserve raccordable à une installation de freinage d'un véhicule automobile et pouvant être commandée par l'intermédiaire d'une conduite de freinage allant de l'installation (1) de freinage du véhicule automobile au circuit utilisateur (18), par le fait que la partie amenée (3) de la conduite d'alimentation (3, 17) est la conduite de réserve, et par le fait que la conduite d'amenée de commande (33) et la conduite de sortie de commande (21) forment la conduite de freinage.

11. Dispositif de commande de secours selon l'une des revendications 1 à 2 ou 4 à 10, caractérisé par le fait que le piston de commande (50) est précontraint, par un élément élastique (53), dans la direction opposée à l'action de la pression d'alimentation régnant dans la chambre d'entrée de réserve (10), et est compensé pour ce qui est de la pression de la réserve (19) du circuit utilisateur.

Fig. 1

Fig. 2